(19) Europäisches Patentamt
European Patent Office
Office européen des brevets

(11) EP 3 404 236 A1

(12) EUROPEAN PATENT APPLICATION
published in accordance with Art. 153(4) EPC

(43) Date of publication:
21.11.2018 Bulletin 2018/47

(51) Int Cl.:
F02D 29/02 (2006.01)      F02D 17/00 (2006.01)
F02N 11/04 (2006.01)

(21) Application number: 17741341.6

(22) Date of filing: 16.01.2017

(86) International application number:
PCT/JP2017/001194

(87) International publication number:
WO 2017/126463 (27.07.2017 Gazette 2017/30)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 20.01.2016 JP 2016009148

(71) Applicant: Yamaha Hatsudoki Kabushiki Kaisha
Iwata-shi, Shizuoka 438-8501 (JP)

(72) Inventor: HINO, Haruyoshi
Iwata-shi
Shizuoka 438-8501 (JP)

(74) Representative: Zimmermann, Tankred Klaus et al
Schoppe, Zimmermann, Stöckeler
Zinkler, Schenk & Partner mbB
Patentanwälte
Radlkoferstrasse 2
81373 München (DE)

(54) VEHICLE

(57) The present teaching provides a vehicle capable of improving fuel efficiency while reducing an occurrence of a situation in which the state of charge of an electric power storage is excessively lowered. A vehicle includes: an engine including a crankshaft; a drive member that drives the vehicle; a starter generator; an electric power storage; a main switch; and a control device that, when the vehicle is stopped, continues a forward rotation of the crankshaft by repeatedly switching a state of the crankshaft among a plurality of states including an engine driving state where the crankshaft is driven in a forward rotation by a combustion operation of the engine and a starter generator driving state where the crankshaft is driven in a forward rotation by the starter generator driving the crankshaft, stops a combustion operation of the engine in at least part of a period in which the crankshaft is in the starter generator driving state, and directs the starter generator to charge the electric power storage in at least part of a period in which the crankshaft is in the engine driving state.

FIG. 2

## Description

Technical Field

The present teaching relates to a vehicle.

Background Art

Vehicles having an idling stop function are known. The idling stop function is to stop an engine in a case where a predetermined condition, such as stopping of the vehicle, is satisfied. Thus, the idling stop function is aimed to improve fuel efficiency.

For example, Patent Literature 1 (PTL 1) shows a vehicle including an idling stop control device.

Citation List

Patent Literature

PTL 1: Japanese Patent Application Laid-Open No. 2010-163879

Summary of Invention

Technical Problem

An idling stop control shown in PTL 1 is assumed to be performed during a temporary stop, for example, when waiting at a traffic light. Thus, the electric power supply from a battery of a vehicle to various electrical loads is set to continue while the idling stop control is performed. The electrical loads are, for example, accessories such as a headlight. As time elapses in the idling stop control, battery discharge progresses, and if the battery reaches an overdischarge state, restarting an engine may be difficult.

The idling stop control device shown in PTL 1 is provided with charge state detection means for detecting a battery charge state. The idling stop control device shown in PTL 1 drives a starter generator and restarts an engine upon determining that the battery charge state is not a state suitable for the idling stop control.

When the idling stop control device shown in PTL 1 drives the starter generator and restarts the engine, electric power charged in the battery is supplied to the starter generator. That is, when the engine is restarted, electric power stored in the battery is consumed.

At a time of restarting the engine which has been stopped by the idling stop control, an engine mechanism including a crankshaft and a piston is driven from a stop state. At this time, large electric power is consumed from the battery.

If such electric power consumption for shifting the engine mechanism from the stop state to a moving state is caused while the battery charge state is too low to be a state suitable for the idling stop control, a risk arises that the state of charge (SOC) of the battery may be excessively lowered.

An object of the present teaching is to provide a vehicle capable of improving fuel efficiency while reducing an occurrence of a situation in which the state of charge of an electric power storage is excessively lowered.

Solution to Problem

The present inventor has conducted studies on fuel efficiency while a vehicle is stopped.

In a case of the stopped vehicle, rotational power that is outputted from an engine via a crankshaft does not contribute to the traveling of the vehicle.

The idling stop function is, for example, to stop the engine when the vehicle is stopped. Thus, the idling stop function is aimed to improve fuel efficiency. At a time of restarting the engine which has been stopped by the idling stop control, however, an engine mechanism including the crankshaft and a piston is driven from a stop state. For this, a large amount of electric power is consumed from an electric power storage. To make up for the consumed electric power, for example, a starter generator generates electric power to charge the electric power storage during traveling. The engine is therefore required to output enough power to compensate for the electric power consumed for restarting the engine. This lowers fuel efficiency.

To reduce electric power consumed for driving the engine mechanism from the stop state at a time of restarting the engine, it is conceivable to rotate the crankshaft at a low rotation speed with the crankshaft still being rotated while the vehicle is stopped. In other words, it is conceivable to lower an idling rotation speed. In this regard, however, simply reducing the amount of air and the amount of fuel supply so as to lower the idling rotation speed makes it more likely that rotation of the crankshaft will be unstable.

The present inventor made studies about increasing a load on rotation of the crankshaft for the purpose of lowering the idling rotation speed. For example, the amount of electric power generated by the starter generator is increased, to increase the load on the rotation of the crankshaft. As the load on the rotation of the crankshaft increases, the rotation speed of the engine decreases. Thus, the number of times a fuel is injected per unit of time decreases. Thus, the fuel consumption decreases. The fuel efficiency improves.

Increasing the amount of electric power generated by the starter generator in order to increase the load on rotation of the crankshaft causes increased electric power to be charged in the electric power storage. If the electric power storage reaches a full charge state, the amount of electric power generated by the starter generator decreases. The starter generator can no longer increase the load on rotation of the crankshaft. The rotation speed of the engine no longer decreases. Thus, the fuel consumption no longer decreases.

In this respect, the present inventor has conducted studies about an approach of venturing to consume electric power of the electric power storage. As a result of the studies, the present inventor conceived the idea of causing the starter generator to drive the crankshaft (starter generator driving state) and also to stop an engine combustion operation, in order to consume electric power of the electric power storage.

If, after the engine combustion operation, electric power is supplied from the electric power storage to the starter generator under the starter generator driving state so that the combustion operation stops, the crankshaft serves as a load on rotation of the starter generator. Thus, the starter generator consumes electric power from the electric power storage. Meanwhile, the crankshaft is driven by the starter generator, and therefore the crankshaft continues rotating. At this time, no fuel is consumed because the combustion operation is stopped.

When charging, the electric power storage is enabled by the consumption of electric power from the electric power storage, the fuel is supplied to the engine, so that the engine combustion operation resumes. The crankshaft is driven by the combustion operation (engine driving state). The starter generator, which is driven by the crankshaft, generates electric power, and supplies electric power to the electric power storage. Since charging the electric power storage is enabled, the electric power storage is charged.

In this manner, the engine combustion operation is stopped in a period of the starter generator driving state. This period is a period for consuming electric power from the electric power storage. In this period, the fuel is not consumed. In a period of the engine driving state, the starter generator charges the electric power storage. In this period, the number of times the fuel is injected decreases due to a rotation load imposed by the starter generator charging the electric power storage. Thus, the fuel efficiency improves.

The present inventor discovered that alternately switching the state of the crankshaft among a plurality of states including the starter generator driving state and the engine driving state can improve the fuel efficiency. In a period of a vehicle stop state, the crankshaft is rotationally driven by the starter generator with the fuel supply stopped, for venturing to consume electric power from the electric power storage. This can improve the fuel efficiency.

The above-described operation can be treated as a repeat of an engine state change. As the engine stops, for example, stopping the movement of the mechanism including the crankshaft and stopping only a power generation function exerted by combustion without stopping the movement of the mechanism are conceivable.

When a forward rotation of the crankshaft is not stopped though the power generation function of the engine is stopped, prompt start of the combustion operation can be easily implemented merely by supplying the fuel to the engine and performing ignition at an appropriate timing.

The present inventor assumed a state of driving the crankshaft by the starter generator while stopping the engine combustion operation. The electric power required for resuming the combustion operation under a state where the engine combustion operation is stopped and the crankshaft is in a forward rotation is less than the electric power required for resuming the combustion operation under a state where the crankshaft is stopped. Accordingly, resuming the combustion operation under the state where the crankshaft is in a forward rotation can reduce an occurrence of a situation in which the state of charge of the electric power storage is excessively lowered.

In addition, resuming the combustion operation under the state where the crankshaft is in a forward rotation makes it less likely that an operation becomes unstable at the time of resumption.

Driving the crankshaft by the starter generator while stopping the engine combustion operation consumes electric power. Here, the engine temperature after the engine combustion operation is higher than the temperature before the initial start of the engine. This is why the electric power for continuing the forward rotation of the crankshaft is less than the electric power for continuing the forward rotation without experiencing any engine combustion operation, for example.

The present teaching is a teaching accomplished based on the above discoveries.

A vehicle according to the present teaching accomplished based on the above discoveries may have the following configurations.

(1) A vehicle according to an aspect of the present teaching includes:

an engine including a crankshaft, and configured to output rotational power via the crankshaft;
a drive member that drives the vehicle by receiving rotational power outputted from the engine via the crankshaft;
a starter generator including a rotor that is connected to the crankshaft so as to rotate with its speed ratio to the crankshaft being fixed, the starter generator being configured to drive the crankshaft in starting the engine, and to be driven by the engine to generate electric power when the engine is in a combustion operation;
an electric power storage that exchanges a current between itself and the starter generator;
a main switch that receives an instruction for supplying electric power in accordance with an operation performed thereon; and
a control device that causes a combustion operation of the engine in a state where the main switch allows the control device to be supplied with electric power by an operation performed thereon, and then, in at least part of a period in which the state of the main switch is continued and the vehicle is stopped, performs all of: (A) continuing the forward rotation of the crankshaft by repeatedly switching a state of the crankshaft among a plurality of states including an engine driving state where the crankshaft is driven in a forward rotation by a combustion operation of the engine and a starter generator driving state where the crankshaft is driven in a forward rotation by the starter generator driving the crankshaft; (B) stopping a combustion operation of the engine in at least part of a period in which the crankshaft is in the starter generator driving state; and (C) directing the starter generator to charge the electric power storage in at least part of a period in which the crankshaft is in the engine driving state.

The control device causes the combustion operation of the engine in the state where the main switch allows the control device to be supplied with electric power by an operation performed thereon, and then, in at least part of a period in which the state of the main switch is continued and the vehicle is stopped, performs all of (A) to (C) below:

(A) continuing the forward rotation of the crankshaft by repeatedly switching a state of the crankshaft among a plurality of states including the engine driving state and the starter generator driving state;
(B) stopping the engine combustion operation in at least part of a period in which the crankshaft is in the starter generator driving state; and
(C) directing the starter generator to charge the electric power storage in at least part of a period in which the crankshaft is in the engine driving state.

The vehicle of (1) is driven by the drive member as a result of the drive member receiving rotational power outputted from the engine via the crankshaft. The control device causes the engine combustion operation, and then, in at least part of a period in which the state of the main switch is continued and the vehicle is stopped, continues a forward rotation of the crankshaft by repeatedly switching the state of the crankshaft among a plurality of states including the engine driving state and the starter generator driving state.

In the starter generator driving state, the control device stops the engine combustion operation and directs the starter generator to drive the crankshaft in a forward rotation. In at least part of the starter generator driving state, the engine combustion operation is stopped, and thus fuel consumption can be suppressed. In the engine driving state, the control device causes the engine combustion operation to drive the crankshaft in a forward rotation. In at least part of a period in which the crankshaft is in the engine driving state, the electric power storage is charged. The state of the crankshaft is repeatedly switched among a plurality of states including the engine driving state and the starter generator driving state.

In this manner, the forward rotation of the crankshaft is continued.

In at least part of the starter generator driving state, the state of charge of the electric power storage is likely to decrease, because the engine combustion operation is stopped. This brings the electric power storage into an easy-to-charge state. In addition, fuel injection is suppressed. In at least part of a period in which the crankshaft is in the engine driving state, the state of charge of the electric power storage is likely to increase. The starter generator generates electric power so as to charge the electric power storage. As a result, a load imposed by the starter generator increases from the standpoint of the crankshaft, i.e., the engine. The rotation speed of the crankshaft decreases. The number of times a fuel is injected per unit of time decreases, and thus the fuel consumption decreases. Accordingly, performing all of (A) to (C) above leads to an improvement in fuel efficiency.

In the starter generator driving state, the crankshaft is driven in a forward rotation. That is, the crankshaft is not stopped even though the engine combustion operation is stopped. In the starter generator driving state, therefore, the engine combustion operation resumes once a fuel is supplied to the engine. In other words, in the starter generator driving state, the crankshaft is in a forward rotation, and therefore resumption of the combustion operation does not require that the crankshaft be driven from a stop state. This can suppress the amount of electric power consumed for switching the state. Accordingly, the engine combustion operation can be resumed by using a smaller amount of electric power from the electric power storage, as compared with when, for example, the crankshaft is driven from the stop state. This can suppress an occurrence of a situation in which resuming the engine combustion operation after stopping the engine combustion operation is not easy. Thus, the engine combustion operation can be resumed with an enhanced reliability.

The vehicle of (1) can improve the fuel efficiency while reducing an occurrence of a situation in which the state of charge of the electric power storage is excessively lowered.

The plurality of states may include a state other than the engine driving state and the starter generator driving state. The plurality of states may include, for example, a freewheeling state where the crankshaft is driven in a forward rotation by inertia and a balanced state where an engine torque and a starter generator torque are equal to each other while the crankshaft is not rotated by inertia. In the freewheeling state, an inertial torque of the crankshaft is higher than both a torque caused by the engine combustion operation and a torque caused by the starter generator. In the freewheeling state, the engine combustion operation may be stopped. In the freewheeling state, it may not be necessary that the starter generator drives the crankshaft in a forward rotation.

(2) Another aspect of the present teaching is the vehicle of (1), wherein

after the control device causes a combustion operation of the engine in the state where the main switch allows the control device to be supplied with electric power; the control device continues a forward rotation of the crankshaft by repeatedly switching a state of the crankshaft among the plurality of states, in at least part of a period in which the state of the main switch is continued, the vehicle is stopped, and a temperature of the engine exceeds a predefined switching allowed temperature.

In the configuration of (2), when the engine temperature exceeds the predefined switching allowed temperature, the state of the crankshaft is repeatedly switched among the plurality of states including the engine driving state and the starter generator driving state. Therefore, in at least part of a period in which the engine temperature exceeds the predefined switching allowed temperature, the engine combustion operation is stopped and the starter generator drives the crankshaft. A reduced load is put on the starter generator driving the crankshaft. Accordingly, more improvement in the fuel efficiency can be obtained.

(3) Another aspect of the present teaching is the vehicle of (1) or (2), wherein

after the control device causes a combustion operation of the engine in the state where the main switch allows the control device to be supplied with electric power; the control device continues a forward rotation of the crankshaft by alternately switching a state of the crankshaft between the engine driving state and the starter generator driving state, in at least part of a period in which the state of the main switch is continued and the vehicle is stopped.

In the configuration of (3), the state of the crankshaft is alternately switched between the starter generator driving state where the starter generator drives the crankshaft and the engine driving state where the starter generator charges the electric power storage, to continue a forward rotation of the crankshaft. This can further suppress an occurrence of a situation in which the state of charge of the electric power storage decreases.

Here, in the course of the control device alternately switching the state of the crankshaft between the engine driving state and the starter generator driving state, the freewheeling state and/or the balanced state may occur between the engine driving state and the starter generator state.

(4) Another aspect of the present teaching is the vehicle of (3), wherein

the control device switches a state of the crankshaft from the engine driving state to the starter generator driving state such that the state of charge of the electric power storage decreases, and switches a state of the crankshaft from the starter generator driving state to the engine driving state such that the state of charge of the electric power storage increases.

In the configuration of (4), the state of the crankshaft is switched to the starter generator driving state, so that the state of charge of the electric power storage decreases. This brings the electric power storage into an easy-to-charge state. In addition, fuel injection is suppressed in the starter generator driving state. In at least part of a period in which the crankshaft is in the engine driving state, the state of charge of the electric power storage is likely to increase. Switching the state of the crankshaft to the engine driving state allows the state of charge of the electric power storage to increase. At this time, the starter generator generates electric power so as to increase the state of charge of the electric power storage. As a result, a load imposed by the starter generator increases from the standpoint of the crankshaft, i.e., the engine. Consequently, the rotation speed of the crankshaft rotated by the engine combustion operation decreases. The number of times a fuel is injected per unit of time decreases, and thus the fuel consumption decreases. The fuel efficiency improves accordingly. In the configuration of (4), a state where the state of charge of the electric power storage decreases and a state where the state of charge of the electric power storage increases are alternately switched from one to the other, so that the fuel efficiency improves.

(5) Another aspect of the present teaching is the vehicle of any one of (1) to (4), wherein

the control device switches a state of the crankshaft upon satisfaction of a predefined switching condition.

In the configuration of (5), the state switching including charging of the electric power storage and discharging of the electric power storage is performed in accordance with the predefined switching condition. This can improve the fuel efficiency while further suppressing an occurrence of a situation in which the state of charge of the electric power storage provided in the vehicle is excessively lowered.

(6) Another aspect of the present teaching is the vehicle of (5), wherein

the control device switches a state of the crankshaft in accordance with the state of charge of the electric power storage.

In the configuration of (6), the state switching including charging of the electric power storage and discharging of the electric power storage is performed in accordance with the state of charge of the electric power storage. This can improve the fuel efficiency while further suppressing occurrence of a situation in which the state of charge of the electric power storage is excessively lowered.

(7) Another aspect of the present teaching is the vehicle of (5), wherein

the control device switches a state of the crankshaft with a predefined time cycle.

In the configuration of (7), switching of the state of the crankshaft is periodically performed. Thus, the state switching including charging of the electric power storage and discharging of the electric power storage is periodically performed. This can improve the fuel efficiency while further suppressing an occurrence of a situation in which the state of charge of the electric power storage is excessively lowered.

(8) Another aspect of the present teaching is the vehicle of any one of (1) to (7), wherein

the starter generator includes a stator having a stator core and windings, the stator core being provided with a plurality of teeth spaced apart from one another by a slot in a circumferential direction, the windings being wound on the teeth, each of the plurality of teeth having a portion where the winding is wound, and

the rotor includes a permanent magnet part and a plurality of magnetic pole portions, the number of the plurality of magnetic pole portions being more than the number of the plurality of teeth, the plurality of magnetic pole portions being formed by the permanent magnet part and provided on a surface opposed to the stator.

The configuration of (8) can suppress the amount of electric power generated by the starter generator while the vehicle is traveling, and also can obtain a starter generator torque required for driving the crankshaft in a forward rotation while the vehicle is stopped. Accordingly, electric power that the starter generator generates while the vehicle is traveling can be effectively used to charge the electric power storage. This can further improve the fuel efficiency.

Advantageous Effects of Invention

The present teaching can provide a vehicle capable of improving fuel efficiency while reducing an occurrence of a situation in which the state of charge of an electric power storage is excessively lowered.

The terminology used herein is for defining particular embodiments only and is not intended to limit the teaching.

As used herein, the term "and/or" includes any and all combinations of one or more of the associated listed items.

As used herein, the terms "including", "comprising", or "having", and variations thereof specify the presence of stated features, steps, operations, elements, components, and/or equivalents thereof, and can include one or more of steps, operations, elements, components, and/or their groups.

As used herein, the terms "attached", "connected", "coupled", and/or equivalents thereof are used in a broad sense, and include both of direct and indirect attachment, connection, and coupling. The terms "connected" and "coupled" can be used not only for physical or mechanical connection or coupling, but also for direct or indirect electrical connection or coupling.

Unless otherwise defined, all terms (including technical and scientific terms) used herein have the same meaning as commonly understood by one of ordinary skill in the art to which the present teaching belongs.

It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein.

It will be understood that the description of the present teaching discloses a number of techniques and steps.

Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion.

Nevertheless, Description and Claims should be read with the understanding that such combinations are entirely within the scope of the present teaching and the claims.

This Description describes a novel vehicle.

In the description given below, for the purposes of explanation, numerous specific details are set forth in order to provide a thorough understanding of the present teaching.

It will be apparent, however, that those skilled in the art may practice the present teaching without these specific details.

The present disclosure is to be considered as an exemplification of the present teaching, and is not intended to limit the present teaching to the specific embodiments illustrated by drawings or descriptions below.

The electric power storage is a device that stores electric power. The electric power storage is, for example, a battery. The electric power storage may be a capacitor.

The starter generator driving state is a state where the starter generator drives the crankshaft in a forward rotation. The starter generator driving state is a state where the starter generator performs power running. The starter generator driving state includes a state where the engine combustion operation is stopped.

The starter generator driving state may include a state where the engine combustion operation is not stopped. In the starter generator driving state, however, a rotational force of the starter generator is greater than a rotational force caused by the engine combustion operation.

The engine driving state is a state where the engine drives the crankshaft in a forward rotation. The engine driving state includes a state where the starter generator stops electric power generation. That is, the engine driving state includes a state where the power running of the starter generator is stopped.

The engine driving state may include a state where the power running of the starter generator is not stopped. In the engine driving state, however, a rotational force caused by the engine combustion operation is greater than a rotational force of the starter generator.

The magnitude of a driving rotational force at a time of driving the crankshaft in a forward rotation by both the starter generator and the engine can be determined by, for example, comparing the rotation speeds of the crankshaft when the respective driving is stopped.

The vehicle is a transport mechanism. The vehicle is, for example, a wheeled vehicle. The vehicle is, for example, a straddled vehicle. The vehicle is, for example, a motorcycle. Non-limiting examples of the motorcycle include scooter, moped, off-road, and on-road type motorcycles. The straddled vehicle is not limited to motorcycles, but may be, for example, an ATV (All Terrain Vehicle) or the like. The vehicle is not limited to straddled vehicles, but may be, for example, a four-wheel vehicle having a cabin. The vehicle of the present teaching is not limited to wheeled vehicles, but may be, for example, a vessel with a propeller.

The state of charge corresponds to the amount of electric charge stored in the electric power storage. It however suffices that the state of charge substantially reflects the charge level of the electric power storage. It may not always be necessary that the state of charge precisely represents the amount of electric charge. For example, the state of charge may be represented as the integrated amount of current flowing in the electric power storage. Alternatively, the state of charge may be represented as a terminal voltage of the electric power storage. The state of charge may be obtained based on both current and voltage through map conversion or arithmetic operations.

Brief Description of Drawings

[FIG. 1] A diagram showing an external appearance of a vehicle according to an embodiment of the present teaching.
[FIG. 2] A partial cross-sectional view schematically showing an outline configuration of an engine unit shown in FIG. 1.
[FIG. 3] A cross-sectional view of a starter generator shown in FIG. 2, illustrating a cross-section perpendicular to its rotation axis line.
[FIG. 4] (A) is an explanatory diagram schematically showing driving characteristics of the starter generator. (B) is an explanatory diagram schematically showing power generation characteristics.
[FIG. 5] A block diagram outlining an electrical configuration of the vehicle shown in FIG. 1.
[FIG. 6] A flowchart of vehicle operations.
[FIG. 7] A flowchart of a vehicle post-start operation.
[FIG. 8] A flowchart of a vehicle in-stop operation.
[FIG. 9] A time chart showing drive state transitions of an engine and the starter generator.
[FIG. 10] A time chart showing drive state transitions of an engine and a starter generator according to a third embodiment of the present teaching.

Description of Embodiments

In the following, the present teaching will be described based on some preferred embodiments with reference to the drawings.

[First Embodiment]

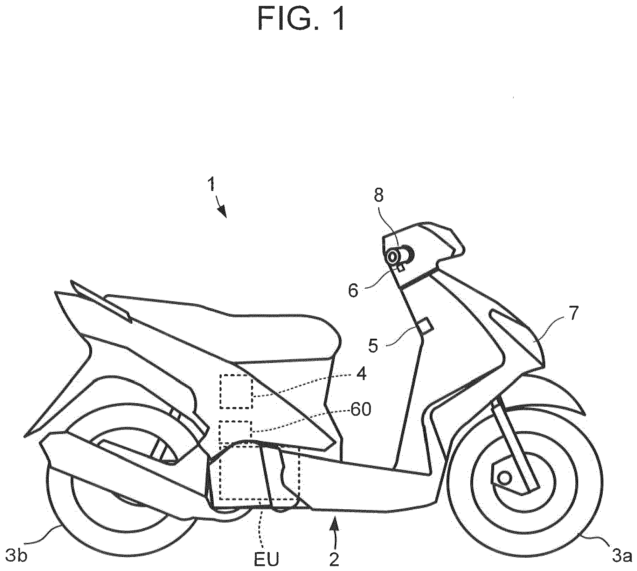

FIG. 1 is a diagram showing an external appearance of a vehicle according to an embodiment of the present teaching.

The vehicle 1 shown in FIG. 1 is a wheeled vehicle. The vehicle 1 includes a vehicle body 2 and wheels 3a, 3b. To be specific, the vehicle 1 is a straddled vehicle. The vehicle 1 is a motorcycle.

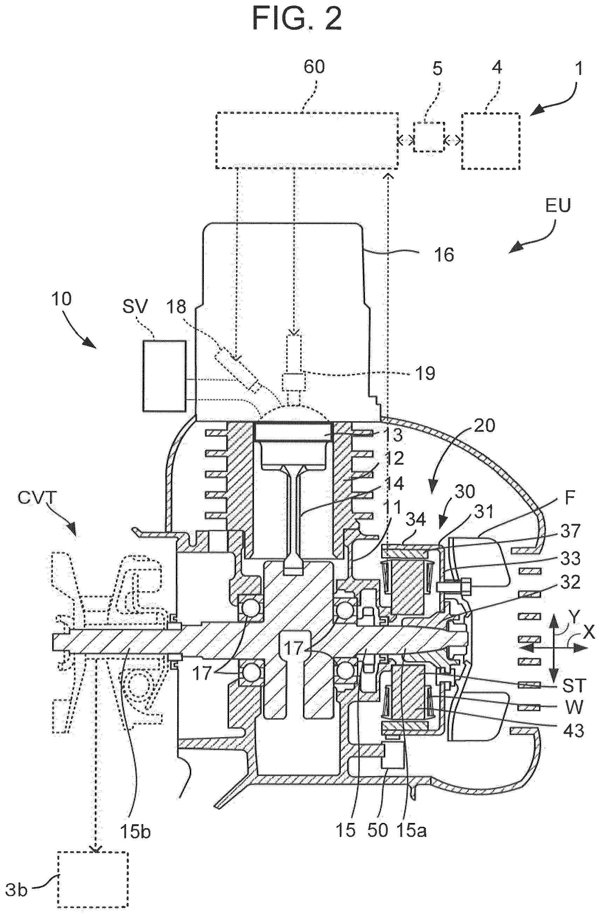

The vehicle 1 includes an engine unit EU. The engine unit EU includes an engine 10 and a starter generator 20 (see FIG. 2). The vehicle 1 includes the engine 10 and the starter generator 20.

The rear wheel 3b receives rotational power outputted from the engine 10, to drive the vehicle 1. The wheel 3b corresponds to one example of the drive member of the present teaching.

The vehicle 1 includes a main switch 5. The main switch 5 is a switch for supplying electric power to each part of the vehicle 1. The vehicle 1 includes a starter switch 6. The starter switch 6 is a switch for starting the engine 10. The vehicle 1 includes an acceleration operator 8. The acceleration operator 8 is an operation element for instructing that the vehicle 1 be accelerated.

The vehicle 1 includes a headlight 7. The vehicle 1 includes an electric power storage 4 that stores electric power. The vehicle 1 includes a control device 60 that controls each part of the vehicle 1.

FIG. 2 is a partial cross-sectional view schematically showing an outline configuration of the engine unit EU shown in FIG. 1.

The engine 10 includes a crank case 11, a cylinder 12, a piston 13, a connecting rod 14, and a crankshaft 15. The piston 13 is arranged in the cylinder 12 such that the piston 13 is freely movable to and fro.

The crankshaft 15 is rotatably arranged in the crank case 11. The connecting rod 14 connects the piston 13 and the crankshaft 15 to each other. A cylinder head 16 is attached to an upper portion of the cylinder 12. The cylinder 12, the cylinder head 16, and the piston 13 define a combustion chamber. The crankshaft 15 is supported on the crank case 11 via a pair of bearings 17 in a freely rotatable manner. The starter generator 20 is attached to one end portion 15a of the crankshaft 15. A continuously variable transmission CVT is attached to the other end portion 15b of the crankshaft 15. The wheel 3b receives rotational power outputted from the engine 10 via the crankshaft 15, the continuously variable transmission CVT, and a clutch (not shown).

The engine 10 is provided with a throttle valve SV and a fuel injector device 18. The throttle valve SV regulates the amount of air to be supplied to the combustion chamber. The degree of opening of the throttle valve SV is regulated in accordance with an operation of the acceleration operator 8 (see FIG. 1). The fuel injector device 18 injects a fuel to supply the fuel to the combustion chamber. The engine 10 is also provided with a spark plug 19.

The engine 10 is an internal combustion engine. The engine 10 is supplied with a fuel. The engine 10 performs a combustion operation in which the fuel is combusted, to output rotational power. The fuel injector device 18 regulates rotational power to be outputted from the engine 10 by regulating the amount of fuel supply. The fuel injector device 18 functions as a rotational power regulating device that regulates rotational power to be outputted from the engine 10.

The engine 10 outputs rotational power via the crankshaft 15. Rotational power of the crankshaft 15 is transmitted to the wheel 3b via the continuously variable transmission CVT and the clutch (not shown). The vehicle 1 is driven by the wheel 3b that receives rotational power outputted from the engine 10 via the crankshaft 15.

The engine 10 of this embodiment is a single-cylinder four-stroke engine. The engine 10 of this embodiment is an air-cooled type engine. The engine 10 may be a water-cooled type engine.

The engine 10 has, during four strokes, a high-load region in which a high load is put on rotation of the crankshaft 15 and a low-load region in which a load put on rotation of the crankshaft 15 is lower than that of the high-load region. From the viewpoint of the rotation angle of the crankshaft 15, the low-load region is wider than the high-load region. During a forward rotation, the engine 10 repeats four strokes, namely, an intake stroke, a compression stroke, an expansion stroke, and an exhaust stroke. The compression stroke is included in the high-load region, and not included in the low-load region.

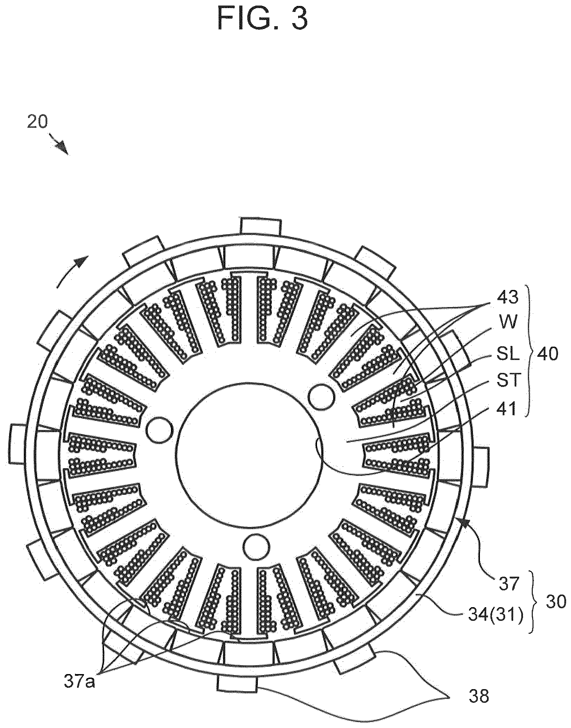

FIG. 3 is a cross-sectional view of the starter generator 20 shown in FIG. 2, illustrating a cross-section perpendicular to its rotation axis line. The starter generator 20 will be described with reference to FIG. 2 and FIG. 3.

The starter generator 20 is a three-phase brushless motor of permanent magnet type. The starter generator 20 also functions as a three-phase brushless generator of permanent magnet type.

The starter generator 20 includes a rotor 30 and a stator 40. The starter generator 20 of this embodiment is of radial gap type. The starter generator 20 is of outer rotor type. That is, the rotor 30 is an outer rotor. The stator 40 is an inner stator.

The rotor 30 includes a rotor body part 31. The rotor body part 31 is made of, for example, a ferromagnetic material. The rotor body part 31 is in the shape of a cylinder with a bottom. The rotor body part 31 includes a cylindrical boss portion 32, a disk-shaped bottom wall portion 33, and a back yoke portion 34 having a cylindrical shape. The bottom wall portion 33 and the back yoke portion 34 are integrally formed. Here, it may also be acceptable that the bottom wall portion 33 and the back yoke portion 34 are formed as separate parts. The bottom wall portion 33 and the back yoke portion 34 are secured to the crankshaft 15 via the cylindrical boss portion 32. A winding to which a current is supplied is not provided in the rotor 30.

The rotor 30 includes a permanent magnet part 37. The rotor 30 includes a plurality of magnetic pole portions 37a. The plurality of magnetic pole portions 37a is formed by the permanent magnet part 37. The plurality of magnetic pole portions 37a is provided on an inner circumferential surface of the back yoke portion 34. In this embodiment, the permanent magnet part 37 includes a plurality of permanent magnets. The plurality of magnetic pole portions 37a is provided in the plurality of permanent magnets, respectively.

The permanent magnet part 37 may alternatively be configured as a single annular permanent magnet. In such a configuration, the single permanent magnet is magnetized such that the plurality of magnetic pole portions 37a appears side by side on the inner circumferential surface.

The plurality of magnetic pole portions 37a are provided such that N pole and S pole appear alternately with respect to a circumferential direction of the starter generator 20. In this embodiment, the number of magnetic poles of the rotor 30 facing the stator 40 is twenty-four. The number of magnetic poles of the rotor 30 means the number of magnetic poles facing the stator 40. No magnetic material is arranged between the magnetic pole portions 37a and the stator 40.

The magnetic pole portions 37a are provided outside the stator 40 with respect to the radial direction of the starter generator 20. The back yoke portion 34 is provided outside the magnetic pole portions 37a with respect to the radial direction. The number of magnetic pole portions 37a included in the starter generator 20 is more than the number of teeth 43.

The rotor 30 may be of interior permanent magnet type (IPM type) in which the magnetic pole portions 37a are embedded in a magnetic element, but it preferably is of surface permanent magnet type (SPM type) in which the magnetic pole portions 37a are exposed from a magnetic element as illustrated in this embodiment.

A cooling fan F is provided at the bottom wall portion 33 of the rotor 30.

The stator 40 includes a stator core ST and a plurality of stator windings W. The stator core ST includes a plurality of teeth 43 arranged at intervals with respect to the circumferential direction. The plurality of teeth 43 integrally extend from the stator core ST toward radially outside. In this embodiment, eighteen teeth 43 in total are arranged at intervals with respect to the circumferential direction. In other words, the stator core ST has eighteen slots SL in total that are arranged at intervals with respect to the circumferential direction. The teeth 43 are arranged at equal intervals with respect to the circumferential direction.

The number of magnetic pole portions 37a included in the rotor 30 is more than the number of teeth 43. The number of magnetic pole portions is equal to 4/3 of the number of slots.

The stator winding W is wound around each of the teeth 43. That is, the multi-phase stator windings W are arranged through the slots SL. In the state shown in FIG. 3, the stator windings W are in the slots SL. Each of the multi-phase stator windings W belongs to any of U-phase, V-phase, and W-phase. The stator windings W are arranged in the order of U-phase, V-phase, and W-phase, for example. A manner in which the stator winding W is wound may be, though not particularly limited, either concentrated winding or distributed winding, and it preferably is concentrated winding.

The rotor 30 includes, on its outer surface, a plurality of detection object parts 38 for detection of the rotation position of the rotor 30. Magnetic effects are used to detect the plurality of detection object parts 38. The plurality of detection object parts 38 arranged at intervals with respect to the circumferential direction are provided on the outer surface of the rotor 30. The detection object parts 38 are made of a ferromagnetic material.

A rotor position detection device 50 is a device that detects the position of the rotor 30. The rotor position detection device 50 is provided at a position allowed to face the plurality of detection object parts 38.

The starter generator 20 is connected to the crankshaft 15 of the engine 10. More specifically, the starter generator 20 is connected to the crankshaft 15 such that the rotor 30 is rotated with its speed ratio to the crankshaft 15 being fixed.

In this embodiment, the rotor 30 is attached to the crankshaft 15 without interposition of a power transmission mechanism (such as a belt, a chain, a gear, a speed reducer, or a speed increaser). The rotor 30 is rotated with a speed ratio of 1:1 relative to the crankshaft 15. The starter generator 20 is configured to cause a forward rotation of the crankshaft 15 by a forward rotation of the engine 10.

The starter generator 20 may be attached to the crankshaft 15 with interposition of a power transmission mechanism. The starter generator 20, however, is connected to the crankshaft 15 with interposition of neither a variable ratio transmission nor a clutch. In other words, the starter generator 20 is connected to the crankshaft 15 without interposition of a device having a variable input/output speed ratio.

In the present teaching, it is preferable that the rotation axis line of the starter generator 20 is substantially coincident with the rotation axis line of the crankshaft 15. It is also preferable that the starter generator 20 is attached to the crankshaft 15 without interposition of any power transmission mechanism, as illustrated in this embodiment.

At a time of engine start, the starter generator 20 drives the crankshaft 15 in a forward rotation, to start the engine 10. In the combustion operation of the engine 10, the starter generator 20 is driven by the engine 10, to generate electric power. Thus, the starter generator 20 has both a function for driving the crankshaft 15 in a forward rotation to start the engine 10 and a function for being driven by the engine 10 to generate electric power in the combustion operation of the engine 10. In at least part of a period following the start of the engine 10, the starter generator 20 is driven in a forward rotation by the crankshaft 15, to function as a generator. That is, in a case where the starter generator 20 functions as a generator, it is not always necessary that the starter generator 20 functions as a generator all the time after the start of engine combustion. It may be possible that a period in which the starter generator 20 functions as a generator and a period in which the starter generator 20 functions as a vehicle driving motor are present after the start of engine combustion.

In the vehicle 1 of this embodiment, a member that transmits rotational power from the engine to the wheel 3b is provided only with the starter generator 20 serving as an apparatus for conversion between electric power and rotational power for driving the wheel 3b. The vehicle of the present teaching, however, is not limited to this, and an apparatus other than the starter generator may be connected to a member that transmits rotational power from the engine to the drive member, the apparatus being capable of conversion between rotational power and electric power.

Characteristics of the starter generator 20 will be described.

At a time of engine start, the starter generator 20 drives the crankshaft 15 in a forward rotation, to start the engine 10. After the start of the engine 10, the starter generator 20 drives the crankshaft 15 in a forward rotation while the combustion operation of the engine 10 is stopped. In these cases, it is more advantageous that the starter generator 20 can output a high torque. As an output torque that can be outputted is higher, the crankshaft 15 with a higher load can be driven in a forward rotation. If a torque that can be outputted is high, the ability to overcome a load of the high-load region at a time of engine start is high.

In general, in a case of a starter generator functioning as a generator, an attempt to improve an output torque of the starter generator may disadvantageously increase a power generation current of the starter generator. A torque that can be outputted is increased by, for example, increasing a magnetic force of a magnet provided in the starter generator. An output torque that can be outputted is also increased by spacing distal end portions of adjacent teeth from each other at a relatively wide interval, the distal end portions facing the stator. In such cases, however, the starter generator has an increased power generation current when the starter generator is driven by the engine. As a result, after the engine start, a charging current to the electric power storage which is connected to the starter generator may become excessive.

For example, to suppress a situation in which the charging current to the electric power storage, which is connected to the starter generator, becomes excessive, an inverter is controlled to convert a current generated in the starter generator into heat. If the current is converted into heat and thrown away, a fuel loss increases.

This way, the starter generator has a trade-off relationship between improvement in the output torque and suppression of the power generation current. Prioritizing one of the torque improvement and the power generation current suppression over the other leads to deterioration of characteristics of the other.

The starter generator 20 of this embodiment has the magnetic pole portions 37a, the number of which is more than the number of teeth 43.

The starter generator 20, therefore, has a higher angular velocity when compared to a starter generator in which the number of magnetic pole portions is less than the number of teeth. The angular velocity contributes to the impedance of windings.

Thus, in outline, the impedance of windings is given by the following expression.

$$(R^2+\omega^2 L^2)^{1/2}$$

where R represents the DC resistance, ω represents the angular velocity in electrical angle, and L represents the inductance.

The angular velocity ω in electrical angle is given by the following expression.

$$\omega = (P/2) \times (N/60) \times 2\pi$$

where P represents the number of magnetic poles, and N represents the rotation speed [rpm].

Since the number of magnetic pole portions 37a included in the starter generator 20 is more than the number of teeth 43, a higher angular velocity ω is obtained when compared to a starter generator in which the number of magnetic pole portions is less than the number of teeth. Thus, the impedance during rotation is high. As the rotation speed N increases, the angular velocity ω becomes higher so that the impedance becomes higher.

Accordingly, the starter generator 20 can, in its rotation region where it functions as a generator, obtain a high impedance and suppress a power generation current.

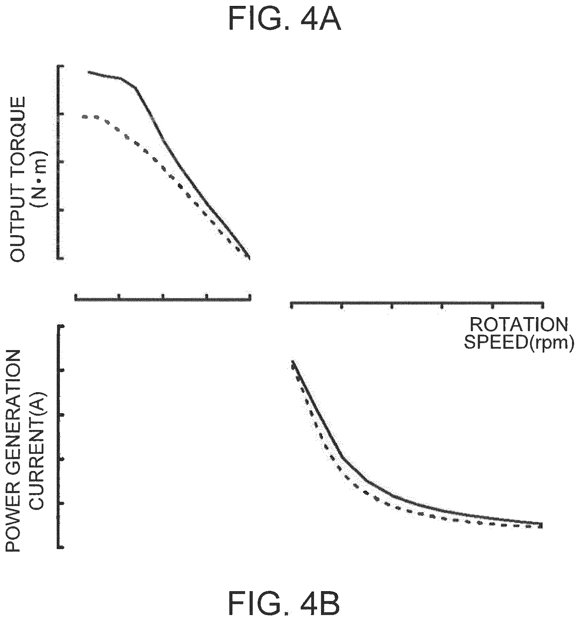

FIG. 4(A) is an explanatory diagram schematically showing driving characteristics of the starter generator 20. FIG. 4(B) is an explanatory diagram schematically showing power generation characteristics.

In the diagrams, the horizontal axis represents the rotation speed of the crankshaft 15. It should be noted that the rotation speed per scale division on the horizontal axis differs between FIG. 4(A) showing the driving characteristics and FIG. 4(B) showing the power generation characteristics. The rotation speed per scale division in the power generation characteristics diagram is more than the rotation speed per scale division in the driving characteristics diagram. The positive vertical axis represents an output torque, and the negative vertical axis represents a power generation current. The solid lines show characteristics of the starter generator 20 according to an example. The broken lines show characteristics of a starter generator according to a comparative example. In the starter generator according to the comparative example, the number of magnetic pole portions is less than the number of teeth.

In FIG. 4(A) and (B), the starter generator 20 of this embodiment is designed with priority given to torque improvement out of torque improvement and power generation current suppression. In the starter generator 20 of this embodiment, the torque improvement can be prioritized by, for example, spacing distal end portions of the adjacent teeth 43 from each other at a relatively wide interval, the distal end portions facing the rotor 30. The starter generator 20 of this embodiment (solid line) can output a higher torque than the starter generator of the comparative example (broken line) can at a time of driving the crankshaft 15 (FIG. 4(A)), and can suppress a power generation current to an extent comparable to the starter generator of the comparative example (broken line) can at a time of high-speed rotation (FIG. 4(B)).

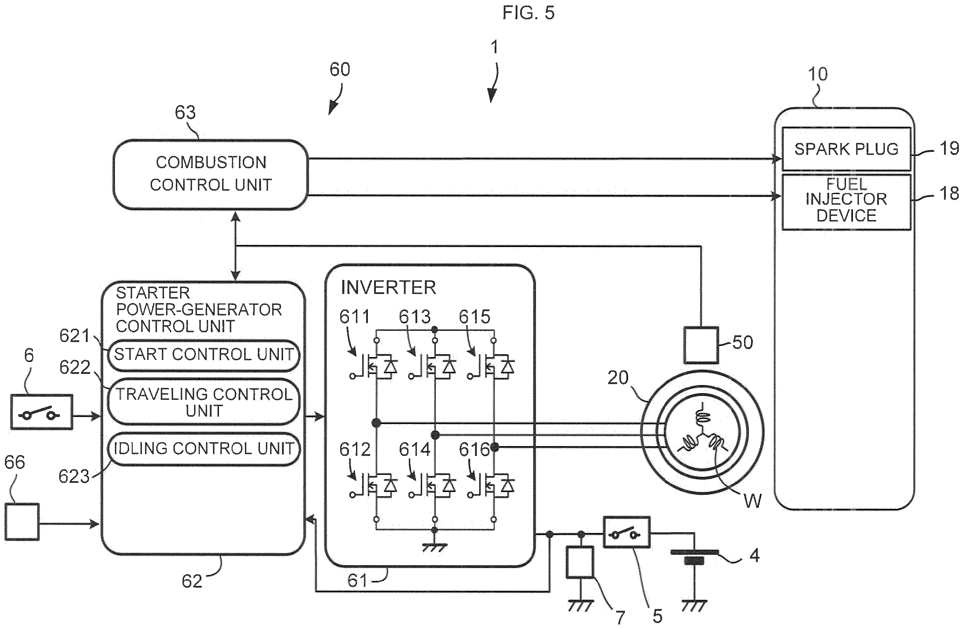

FIG. 5 is a block diagram outlining an electrical configuration of the vehicle 1 shown in FIG. 1.

The vehicle 1 includes a control device 60. The control device 60 controls each part of the vehicle 1. The control device 60 includes an inverter 61.

The starter generator 20 and the electric power storage 4 are connected to the inverter 61. The electric power storage 4 exchanges a current between itself and the starter generator 20. A headlight 7 is also connected to the inverter 61 and the electric power storage 4. The headlight 7 is one example of the accessories installed in the vehicle 1, the headlight 7 consuming electric power when operating.

The inverter 61 includes a plurality of switching parts 611 to 616. In this embodiment, the inverter 61 includes six switching parts 611 to 616.

The switching parts 611 to 616 constitute a three-phase bridge inverter. The plurality of switching parts 611 to 616 are connected to the respective phases of the multi-phase stator windings W.

More specifically, among the plurality of switching parts 611 to 616, every two switching parts that are connected in series constitute a half bridge. The inverter 61 has half bridges each corresponding to each phase of the multi-phase stator windings W. The plurality of half bridges are connected to the respective phases of the multi-phase stator windings W.

The switching parts 611 to 616 selectively allow or block the passing of a current between the multi-phase stator windings W and the electric power storage 4.

In more detail, when the starter generator 20 functions as a starter generator, switching between causing and stopping conduction of the multi-phase stator windings W is implemented by on/off-operation of the switching parts 611 to 616.

When the starter generator 20 functions as a generator, switching between allowing and blocking the passing of a current between each of the stator windings W and the electric power storage 4 is implemented by on/off-operation of the switching parts 611 to 616. By switching on/off the switching parts 611 to 616 one after another, a voltage control and a rectification of a three-phase AC outputted from the starter generator 20 are performed.

Each of the switching parts 611 to 616 has a switching element. The switching element is, for example, a transistor and, in more detail, an FET (Field Effect Transistor). Here, instead of FETs, for example, thyristors and IGBTs (Insulated Gate Bipolar Transistors) are adoptable as the switching parts 611 to 616.

The fuel injector device 18, the spark plug 19, and the electric power storage 4 are connected to the control device 60.

The control device 60 includes a starter power-generator control unit 62 and a combustion control unit 63.

The starter power-generator control unit 62 controls on/off-operation of each of the switching parts 611 to 616, to control the operation of the starter generator 20. The starter power-generator control unit 62 includes a start control unit 621, a traveling control unit 622, and an idling control unit 623.

The combustion control unit 63 controls the spark plug 19 and the fuel injector device 18, to control the combustion operation of the engine 10. The combustion control unit 63 controls rotational power of the engine 10.

The control device 60 is composed of a computer including a central processing unit (not shown) and a storage device (not shown). The central processing unit executes arithmetic processing based on a control program. The storage device stores data relating to programs and arithmetic operations.

The combustion control unit 63 and the starter power-generator control unit 62 including the start control unit 621, the traveling control unit 622 and the idling control unit 623 are implemented by a computer (not shown) and a control program executable by the computer. Thus, below-described operations performed respectively by the combustion control unit 63 and the starter power-generator control unit 62 including the start control unit 621, the traveling control unit 622, and the idling control unit 623 can be considered as operations performed by the control device 60. The starter power-generator control unit 62 and the combustion control unit 63 may be, for example, either configured as separate devices placed at a distance from each other, or integrated as a single device.

The starter switch 6 is connected to the control device 60. The starter switch 6 is actuated by a rider at a time of starting the engine 10. The starter power-generator control unit 62 of the control device 60 detects the state of charge of the electric power storage 4. The starter power-generator control unit 62 detects the state of charge of the electric power storage 4 by detecting the voltage and current of the electric power storage 4. A vehicle speed sensor 66 that detects the vehicle speed of the vehicle 1 is connected to the control device 60. The control device 60 acquires the vehicle speed of the vehicle 1 based on a result of the vehicle speed sensor 66. The starter power-generator control unit 62 detects the degree of opening of the throttle valve SV (see FIG. 2) based on a detection result of a throttle sensor (not shown). The starter power-generator control unit 62 detects the temperature of engine oil in the engine 10 based on a detection result of a temperature sensor (not shown).

The main switch 5 receives an instruction for supplying electric power to the control device 60 in accordance with an operation performed thereon. When the main switch 5 is turned on, electric power is supplied to the control device 60. When the main switch 5 is turned off, electric power supply to the control device 60 is stopped. By turning on/off the main switch 5, electric power supply to electrical equipment such as accessories of the headlight 7 and stopping of the electric power supply are implemented.

The inverter 61, the starter power-generator control unit 62, and the combustion control unit 63 of the control device 60 control the engine 10 and the starter generator 20.

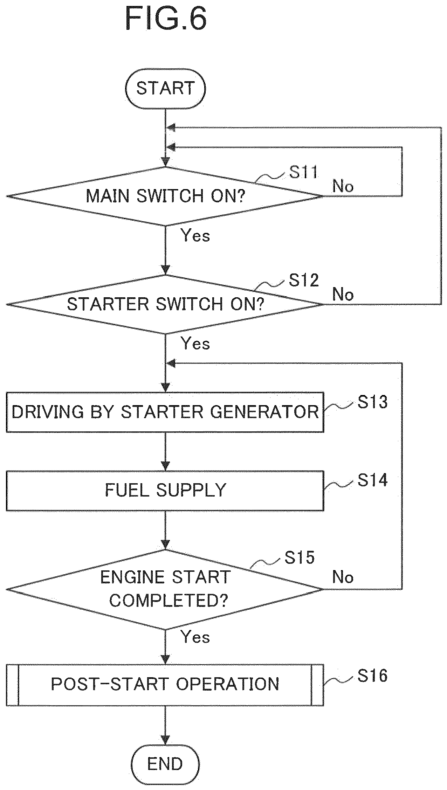

FIG. 6 is a flowchart of operations of the vehicle 1.

Operations of the vehicle 1 will be described with reference to FIG. 5 and FIG. 6.

The control device 60 determines whether or not the main switch 5 is in the ON state (S11). If the main switch 5 is in the ON state (S11: Yes), the control device 60 determines whether or not the starter switch 6 is in the ON state (S12).

If the starter switch 6 is in the ON state (S12: Yes), the control device 60 starts the engine 10. To be exact, the start control unit 621 of the starter power-generator control unit 62 starts the engine 10.

In more detail, the start control unit 621 directs the starter generator 20 to drive the crankshaft 15 (S13). The start control unit 621 performs on/off-operation of the plurality of switching parts 611 to 616 included in the inverter 61 such that a current for driving the rotor 30 in a forward rotation is supplied to the multi-phase stator windings W. The starter generator 20 drives the crankshaft 15 accordingly. On the other hand, the combustion control unit 63 of the control device 60 directs the fuel injector device 18 to supply a fuel (S14). In step S14, the combustion control unit 63 directs the spark plug 19 to cause ignition.

The start control unit 621 determines whether or not start of the engine 10 is completed (S15). If start of the engine 10 is not completed (S15: No), the start control unit 621 and the combustion control unit 63 continue the rotation of the crankshaft 15 driven by the starter generator 20 (S13) and the fuel supply (S14). After start of the engine 10 is completed, the combustion control unit 63 continues the fuel supply until the drive state is switched.

The start control unit 621 uses, for example, the rotation speed of the crankshaft 15 to determine the completion of start of the engine 10. The start control unit 621 acquires the rotation speed of the crankshaft 15 from, for example, a detection result of the rotor position detection device 50.

The state where start of the engine 10 is completed (S15: Yes) is a state where the control device 60 has caused the combustion operation of the engine 10 with electric power supplied by the main switch 5.

If start of the engine 10 is completed (S15: Yes), the control device 60 performs a post-start operation process (S16).

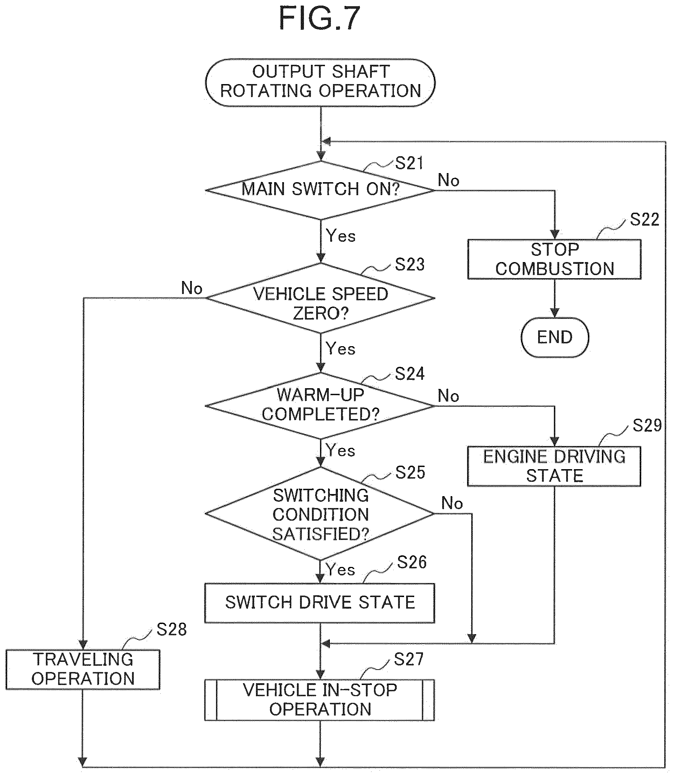

FIG. 7 is a flowchart of a vehicle post-start operation.

In the post-start operation, the control device 60 determines whether or not the main switch 5 is in the ON state (S21).

If the main switch 5 is in the OFF state (S21: No), the control device 60 stops the operation of the engine 10 (S22). Then, the control device 60 terminates the post-start operation process. In step S22 mentioned above, the control device 60 stops both the combustion operation of the engine 10 and the driving by the starter generator 20. To be specific, if the main switch 5 is in the OFF state (S21: Yes), the control device 60 stops the fuel supply performed by the fuel injector device 18. In addition, the control device 60 does not direct the starter generator 20 to drive the crankshaft 15.

If the main switch 5 is in the ON state (S21: Yes), the control device 60 determines whether or not the vehicle speed, which means the traveling speed of the vehicle 1, is zero (S23).

If the vehicle speed is not zero (S23: No), it indicates that the vehicle 1 is traveling. If the vehicle speed is not zero (S23: No), the control device 60 performs a traveling operation (S28). To be exact, the traveling control unit 622 of the starter power-generator control unit 62 performs the traveling operation (S28).

In the traveling operation of step S28, the traveling control unit 622 controls the engine 10 such that the vehicle 1 travels. For example, the traveling control unit 622 directs the fuel injector device 18 to regulate the amount of fuel supply in accordance with the degree of opening of the throttle valve SV. That is, the control device 60 controls the fuel injector device 18 serving as a rotational power regulation unit. Thus, the engine 10 outputs rotational power that is in accordance with a rider's operation.

In the traveling operation of step S28, the control device 60 directs the starter generator 20 to generate electric power. Electric power generated by the starter generator 20 charges the electric power storage 4.

The state where the vehicle speed is zero (S23: Yes) is a state where the main switch 5 is continuously in the ON state and the vehicle 1 is stopped. In this state, transmission of rotational power from the crankshaft 15 to the wheel 3b is discontinued. If the vehicle speed is zero (S23: Yes), the control device 60 controls idling. In more detail, the idling control unit 623 of the starter power-generator control unit 62 and the combustion control unit 63 control idling. The idling control unit 623 determines whether or not a warm-up operation of the engine 10 is completed (S24). If the determination made in step S24 is that a warm-up is not completed (S24: No), the idling control unit 623 of the control device 60 sets an engine driving state as the drive state (S29). The engine driving state is the combustion operation of the engine 10. Causing the combustion operation of the engine 10 raises the temperature of the engine 10 above the temperature before the engine 10 is started. Details of the engine driving state will be given later.

In step S24 mentioned above, the control device 60 of this embodiment determines whether or not the temperature of the engine 10 exceeds a predefined switching allowed temperature. The switching allowed temperature is a warm-up completion temperature that is predefined for the engine and that indicates a state where a warm-up of the engine 10 is completed. For example, the temperature of the engine oil is used as the temperature of the engine 10. In a case of the engine 10 being a water-cooled type engine, the water temperature may be used as the temperature of the engine 10.

When the temperature of the engine 10 is low, a load put on rotation of the crankshaft 15 is high because of the viscosity of the engine oil and the like. In this embodiment, if the engine temperature exceeds the predefined switching allowed temperature, the combustion operation of the engine 10 is stopped and the starter generator 20 drives the crankshaft 15, as will be described later. In this manner, the control device 60 repeatedly switches the state of the crankshaft in part of a period in which the engine temperature exceeds the switching allowed temperature serving as the warm-up completion temperature that is predefined for the engine. At this time, a load put on the starter generator 20 rotating the crankshaft 15 is reduced.

If it is determined that the warm-up operation is completed (S24: Yes), the idling control unit 623 determines whether or not a switching condition is satisfied (S25). The switching condition is a condition for switching the drive state of the engine 10 and the starter generator 20. If the switching condition is satisfied (S25: Yes), the idling control unit 623 switches the drive state of the engine 10 and the starter generator 20 while the vehicle 1 is stopped (S26).

In this embodiment, the control device 60 has a plurality of states as the drive state of the engine 10 and the starter generator 20 while the vehicle is stopped. The plurality of states include the engine driving state and a starter generator driving state.

The engine driving state is a state where the engine 10 is in the combustion operation so that the crankshaft 15 is driven in a forward rotation. The starter generator driving state is a state where the combustion operation of the engine 10 is stopped and the starter generator 20 drives the crankshaft 15 so that the crankshaft 15 is driven in a forward rotation.

The switching condition in step S25 of this embodiment is the state of charge (SOC) of the electric power storage 4. In step S26, the idling control unit 623 switches the drive state of the engine 10 and the starter generator 20 in accordance with the state of charge of the electric power storage 4.

The idling control unit 623 acquires the state of charge of the electric power storage 4. The idling control unit 623 acquires the state of charge by using at least one of a voltage of the electric power storage 4 or a current of the electric power storage 4. The idling control unit 623 of this embodiment acquires the state of charge of the electric power storage 4 in accordance with the voltage of the electric power storage 4. In a case of charging the electric power storage 4 with electric power generated by the starter generator 20; the higher the state of charge of the electric power storage 4 is, the higher the voltage of the electric power storage 4 is. The voltage of the electric power storage 4 contributes to easy an acquisition of the state of charge.

In this embodiment, if the state of charge of the electric power storage 4 exceeds an upper limit of a predefined range, the idling control unit 623 determines that the switching condition is satisfied (S25: Yes). The upper limit of the predefined range is, for example, the state of charge of the electric power storage 4 in a full charge state which is predefined. The predefined full charge state of the electric power storage 4 is a state where the electric power storage 4 is charged with an amount of electric power approximate to the rated charging capacity of the electric power storage 4. The full charge state is, for example, a state where the electric power storage 4 is charged with an amount of electric power in a range of $\pm 10\%$ from the rated charging capacity of the electric power storage 4. In step S26, the control device 60 switches the state of the crankshaft 15, which means the drive state of the crankshaft 15 driven by the engine 10 and the starter generator 20, to the starter generator driving state. To be exact, the idling control unit 623 switches the control state of the crankshaft 15 to the starter generator driving state. The idling control unit 623 of this embodiment switches the control state of the crankshaft 15 to the starter generator driving state if the state of charge of the electric power storage 4 exceeds the upper limit of the predefined range.

In detail, the idling control unit 623 switches the control state of the crankshaft 15 to the starter generator driving state if the electric power storage 4 is in the full charge state. This makes it likely that the full charge state or a high state of charge approximate to the full charge is held at the electric power storage 4. In more detail, the idling control unit 623 switches the control state of the crankshaft 15 to the starter generator driving state if the voltage of the electric power storage 4 is a voltage corresponding to the full charge state.

In subsequent step S27, an operation in accordance with the switched state is performed. The idling control unit 623 switches the state of the crankshaft 15 from the engine driving state to the starter generator driving state such that the state of charge of the electric power storage 4 decreases. The idling control unit 623 switches the state of the crankshaft 15 from the starter generator driving state to the engine driving state such that the state of charge of the electric power storage 4 increases.

If the state of charge of the electric power storage 4 falls below a lower limit of the above-described range, the idling control unit 623 determines that the switching condition is satisfied (S25: Yes). In this case, in step S26, the idling control unit 623 switches the state of the crankshaft 15, which means the drive state of the crankshaft 15 driven by the engine 10 and the starter generator 20, to the engine driving state. To be exact, the idling control unit 623 switches the control state of the crankshaft 15 to the engine driving state.

The lower limit of the predefined range is, for example, lower than the state of charge obtained when the electric power storage 4 is in the predefined full charge state.

After the switching in step S26 mentioned above, the idling control unit 623 performs a vehicle in-stop operation (S27). The idling control unit 623 operates the engine 10 and the starter generator 20 in accordance with the state switched in step S26 mentioned above.

If the switching condition is not satisfied in step S25 mentioned above (S25: No), the idling control unit 623 does not switch the state of the crankshaft 15. Thus, the drive state of the crankshaft 15 driven by the engine 10 and the starter generator 20 is continued.

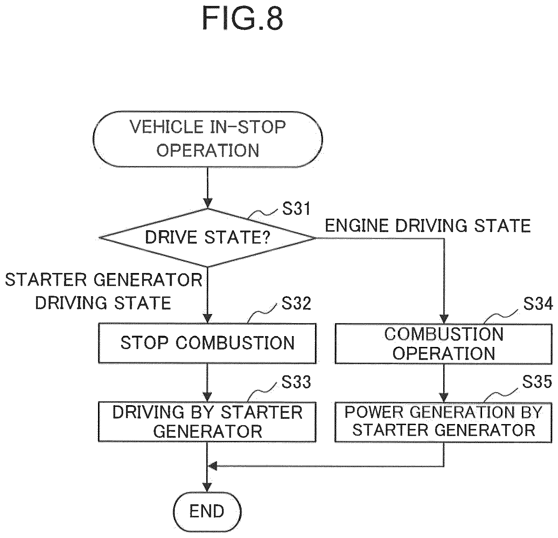

FIG. 8 is a flowchart of the vehicle in-stop operation.

In the vehicle in-stop operation, the idling control unit 623 determines the drive state set in step S26 (S31).

If the determination made in step S31 is that the drive state of the crankshaft 15 driven by the engine 10 and the starter generator 20 is the starter generator driving state, the control device 60 stops the combustion operation of the engine 10 (S32). The combustion control unit 63 of the control device 60 stops the fuel supply performed by the fuel injector device 18. That is, the control device 60 directs the fuel injector device 18 serving as the rotational power regulation unit to stop the output of rotational power from the engine 10. The idling control unit 623 directs the starter generator 20 to drive the crankshaft 15, thus driving the crankshaft 15 in a forward rotation (S33). The engine 10 is driven by the starter generator 20.

If the determination made in step S31 mentioned above is that the drive state of the crankshaft 15 driven by the engine 10 and the starter generator 20 is the engine driving state, the combustion control unit 63 causes the combustion operation of the engine 10 to drive the crankshaft 15 in a forward rotation (S34). The idling control unit 623 directs the starter generator 20 to generate electric power (S35). The starter generator 20 is driven by the engine 10.

In step S32 mentioned above, the control device 60 directs the starter generator 20 to drive the crankshaft 15. To be specific, the idling control unit 623 performs the on/off-operation of the plurality of switching parts 611 to 616 included in the inverter 61 in accordance with the rotation position of the rotor 30 such that a current for driving the rotor 30 in a forward rotation is supplied to the multi-phase stator windings W. This brings the starter generator 20 into a power-running state. The starter generator 20 drives the crankshaft 15.

For the on/off-operation of the switching parts 611 to 616, an operation based on 120-degree conduction is performed.

The 120-degree conduction is a conduction method in which a conduction stop period is provided for each phase of the multi-phase stator windings W and intermittent conduction is performed with a conduction angle of less than 180 degrees. In the 120-degree conduction, for example, the stator winding W of each phase is rendered to be conducting in a period of 120 degrees in electrical angle. Each of the phases of the multi-phase stator windings W experiences the conduction stop period one after another. The idling control unit 623 controls two states of current supply (conducting) and no supply (non-conducting). The electrical angle is an angle on the basis of a repetition cycle of magnetic poles as a reference.

The idling control unit 623 may switch on the switching parts 611 to 616 with a PWM modulated signal.

The idling control unit 623 may perform a vector control on the starter generator 20. The vector control is a control method in which a current supplied to the starter generator 20 is divided into a d-axis component and a q-axis component, the d-axis component corresponding to a magnetic flux direction of a magnet, the q-axis component being orthogonal to the magnetic flux direction in terms of the electrical angle. The q-axis component is a component that affects a torque load of the starter generator 20. The vector control is a control in which each phase of the multi-phase stator windings W is rendered conducting without any conduction stop period. The vector control is a control in which conduction is effected such that a sinusoidal current flows in each phase of the multi-phase stator windings W. Performing the on/off-operation of the plurality of switching parts 611 to 616 at timings based on the vector control causes a sinusoidal current to flow in each of the multi-phase stator windings W. Electric power generation under the vector control is achieved by, for example, drawing a current in synchronization with a sinusoidal wave of an induced voltage of the stator winding W and in the direction of the induced voltage. Here, a sinusoidal current and a sinusoidal voltage mean current and voltage having a sinusoidal waveform. The sinusoidal current contains, for example, distortions and ripples caused by the on/off-operation of the switching parts.

In the vector control, each of the plurality of switching parts 611 to 616 is controlled by a pulse-width-modulated (PWM) signal. A pulse period in the pulse width modulation is shorter than a period of the induced voltage of each phase of the stator windings W. That is, the idling control unit 623 controls the on/off operation of the plurality of switching parts 611 to 616 in accordance with a pulse signal whose period is shorter than the period of the induced voltage of the stator windings W of the starter generator 20.

In the vector control, the idling control unit 623 acquires a d-axis component and a q-axis component based on a current of the multi-phase stator windings W detected by a not-illustrated sensor and the position of the rotor 30 detected by the rotor position detection device 50. The idling control unit 623 controls the on/off timings of the plurality of switching parts 611 to 616 such that the d-axis component and the q-axis component approach predefined target values.

In step S32 mentioned above, the idling control unit 623 performs a phase control. The phase control is a control different from the vector control described above. In the phase control, the idling control unit 623 performs the on/off-operation of each of the plurality of switching parts 611 to 616 in a period equal to the period of the induced voltage of the stator winding W. The idling control unit 623 performs the on/off-operation of each of the plurality of switching parts 611 to 616 based on the position of the rotor 30 detected by the rotor position detection device 50.

Here, in step S32 mentioned above, the idling control unit 623 may perform a vector control instead of the phase control.

In the above-described control, the drive state of the crankshaft 15 driven by the engine 10 and the starter generator 20 is switched to the starter generator driving state if the state of charge of the electric power storage 4 exceeds the upper limit of the predefined range (S25: Yes). The combustion operation of the engine 10 is stopped (S32), and the starter generator 20 drives the crankshaft 15 in a forward rotation. The starter generator 20 driving the crankshaft 15 in a forward rotation consumes electric power from the electric power storage 4. The state of charge of the electric power storage 4 is gradually lowered.

If the state of charge of the electric power storage 4 falls below the lower limit of the predefined range, the drive state of the crankshaft 15 driven by the engine 10 and the starter generator 20 is switched to the engine driving state. The starter generator 20 is directed to generate electric power (S35). The starter generator 20 is driven by the engine 10.

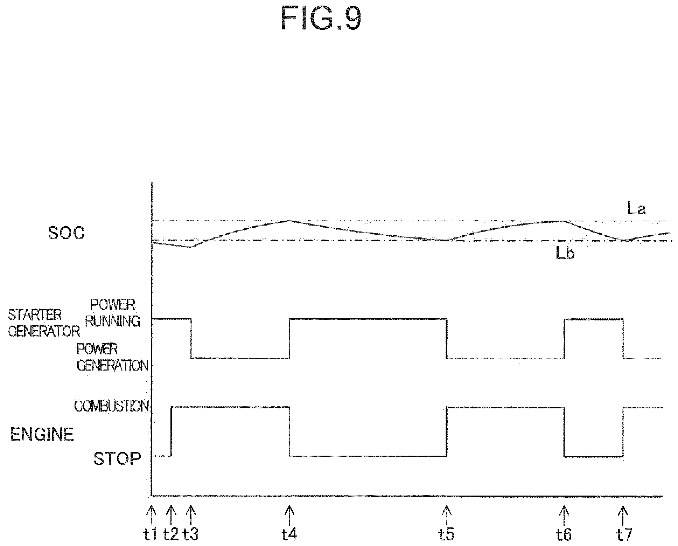

FIG. 9 is a time chart showing drive state transitions of the engine 10 and the starter generator 20.

Referring to the flowcharts of FIGs. 6 to 8 and FIG. 9, the drive state of the crankshaft 15 driven by the engine 10 and the starter generator 20 will be described.

In the time chart, the horizontal axis represents a time elapse, and the vertical axis represents the state of the starter generator 20 and the state of the engine 10. The time chart shows the state of charge of the electric power storage 4. The time chart shows an upper limit La and a lower limit Lb of an SOC range, which serve as a drive state switching condition.

At time t1, if the main switch 5 is in the ON state and the starter switch 6 is in the ON state, the starter generator 20 enters a power-running state. The starter generator 20 drives the crankshaft 15. The starter generator 20 drives the crankshaft 15 in a forward rotation. The state of charge of the electric power storage 4 decreases.

Then at time t2, the engine 10 starts, and then at time t3, upon completion of the start of the engine 10, the control device 60 stops the starter generator 20 driving the crankshaft 15. The control device 60 causes the combustion operation of the engine 10. The crankshaft 15 is driven by the engine 10. The starter generator 20 generates electric power. The state of charge of electric power storage 4 increases.

Then at time t4, upon satisfaction of the switching condition (S25: Yes), the control device 60 switches the drive state (S26). In an example shown in FIG. 9, the satisfaction of the switching condition is achieved by the state of charge of the electric power storage 4 exceeding the upper limit La of the predefined range. At time t4, the drive state of the crankshaft 15 driven by the engine 10 and the starter generator 20 is switched to the starter generator driving state. That is, the combustion operation of the engine 10 stops (S32). The starter generator 20 drives the crankshaft 15 (S33).

In the starter generator driving state, the combustion operation of the engine 10 stops, and therefore fuel consumption can be reduced. Thus, the fuel efficiency improves.

In this embodiment, if the temperature of the engine 10 exceeds the predefined switching allowed temperature, it is considered as completion of the warm-up (S24: Yes), and the drive condition is switched. More specifically, if the temperature of the engine 10 exceeds the switching allowed temperature, the combustion operation of the engine 10 stops and the starter generator 20 drives the crankshaft 15. At this time, a load put on the starter generator 20 driving the crankshaft 15 is reduced because the engine 10 has a high temperature.

Then at time t5, if the switching condition is satisfied (S25: Yes), the control device 60 switches the drive state (S26). In the example shown in FIG. 9, the satisfaction of the switching condition is achieved by the state of charge of the electric power storage 4 falling below the lower limit Lb of the predefined range. At time t5, the drive state of the crankshaft 15 driven by the engine 10 and the starter generator 20 is switched to the engine driving state. Thus, the combustion operation of the engine 10 is caused to drive the crankshaft 15 (S34). The starter generator 20 generates electric power (S35).

In the engine driving state, the starter generator 20 driven by the crankshaft 15 generates electric power, and supplies electric power to the electric power storage 4. Since the electric power storage 4 is in a chargeable state, the electric power storage 4 is charged. Due to a rotation load imposed by the starter generator 20 charging the electric power storage 4, the rotation speed of the crankshaft 15 decreases when compared to when the starter generator 20 performs no charging. Thus, the number of times the fuel is injected decreases. This improves the fuel efficiency. Before the drive state is switched to the engine driving state at time t5, the crankshaft 15 is driven in a forward rotation by the starter generator 20. Once the fuel is supplied to the engine 10 the combustion operation of the engine 10 resumes. Therefore it is not necessary to drive the crankshaft 15 from a stop state. Thus, a reduced amount of electric power is consumed for switching the state. That is, the amount of electric power consumed for causing the combustion operation of the engine 10 again can be reduced. Accordingly, the engine combustion operation can be resumed by using a smaller amount of electric power from the electric power storage, as compared with when, for example, the crankshaft is driven from the stop state. This suppresses an occurrence of a situation in which resuming the combustion operation of the engine 10 after stopping the combustion operation of the engine 10 is not easy. As a result, an occurrence of a situation in which the state of charge of the electric power storage is excessively lowered can be suppressed. Upon resumption of the combustion operation of the engine 10, the starter generator 20 generates electric power. The starter generator 20 charges the electric power storage. The state of charge of the electric power storage is restored.

After time t5, at time t6, upon satisfaction of the switching condition (S25: Yes), the control device 60 switches the drive state of the crankshaft 15 driven by the engine 10 and the starter generator 20 (S26). In the example shown in FIG. 9, the satisfaction of the switching condition is achieved by the state of charge of the electric power storage 4 exceeding the upper limit of the predefined range. At time t6, the drive state of the crankshaft 15 driven by the engine 10 and the starter generator 20 is switched to the starter generator driving state. That is, the combustion operation of the engine 10 stops (S32). The starter generator 20 drives the crankshaft 15 (S33).

Then at time t7, upon satisfaction of the switching condition (S25: Yes), the control device 60 switches the drive state (S26). In the example shown in FIG. 9, the satisfaction of the switching condition is achieved by the state of charge of the electric power storage 4 falling below the lower limit of the predefined range. At time t7, the drive state of the crankshaft 15 driven by the engine 10 and the starter generator 20 is switched to the engine driving state. Thus, the combustion operation of the engine 10 is caused to drive the crankshaft 15 (S34). The starter generator 20 generates electric power (S35).

In this embodiment, the plurality of states including the engine driving state are repeatedly switched. In the engine driving state, the electric power storage 4 is charged. Thus, charging the electric power storage 4 is repeatedly performed. It is possible to continue the operation while repeatedly switching the plurality of states including the engine driving state and the starter generator driving state. In at least part of a period thereof, the state of the crankshaft 15 is switched from one to the other of the engine driving state and the starter generator driving state. In this manner, the forward rotation of the crankshaft 15 is continued.

This embodiment can improve the fuel efficiency with long-term suppression of an occurrence of the situation in which the state of charge of the electric power storage 4 is excessively lowered.

The suppression of the situation in which the state of charge of the electric power storage 4 is excessively lowered allows for downsizing of the electric power storage 4.

In this embodiment, the engine driving state and the starter generator driving state are alternately switched. That is, the starter generator driving state follows the engine driving state. In this embodiment, an occurrence of the situation in which the state of charge of the electric power storage 4 is lowered can be further suppressed.

Since the rotation of the crankshaft is continued, unpleasant vibrations can be suppressed which may otherwise be caused when, for example, restarting is made from a crankshaft stop state.

In a case where, for example, switching object states include the crankshaft stop state, the engine combustion operation starts from the crankshaft stop state. In this case, when rotation of the crankshaft is started by the combustion operation of the engine, its rotational force may be undesirably transmitted to the wheel via the transmission and the clutch. This involves a risk that the vehicle body or the wheel may be vibrated. Restarting is made independently of a rider's operation. Vibrations involved in restarting, therefore, may be unexpected and unpleasant vibrations for the rider.

This embodiment, in which the engine driving state and the starter generator driving state are alternately switched, can suppress a situation in which the stopped crankshaft starts the rotation independently of a rider's operation. Accordingly, vibrations which are unpleasant for the rider can be reduced.

In this embodiment, the number of magnetic pole portions 37a included in the starter generator 20 is more than the number of teeth 43. Therefore, even though a torque for driving the crankshaft 15 in a forward rotation increases, a power generation current can be suppressed while the crankshaft 15 is in high-speed rotation such as while the vehicle 1 is travelling. Thus, a current that is consumed as heat can be suppressed. Accordingly, more improvement in the fuel efficiency of the vehicle 1 can be obtained.

[Second Embodiment]

A second embodiment of the present teaching will now be described. In descriptions of the second embodiment given below, the same drawings and reference signs as mentioned in the first embodiment are used, and differences from the first embodiment described above will be mainly described.

This embodiment is different from the first embodiment in terms of the switching condition in step S25 of FIG. 7.

In step S25 of this embodiment, the switching condition is a timing coming with a predefined time cycle.

In this embodiment, the control device 60 switches the drive state of the crankshaft 15 driven by the engine 10 and the starter generator 20, with a predefined time cycle (S26). Specifically, the control device 60 repeatedly switches the drive state of the crankshaft 15 driven by the engine 10 and the starter generator 20 among a plurality of states including the starter generator driving state and the engine driving state, with a predefined time cycle. More specifically, the control device 60 of this embodiment switches the state of the crankshaft 15 alternately between the starter generator driving state and the engine driving state, with a predefined time cycle. The control device 60 switches the drive state with a time cycle of the starter generator driving state being different from a time cycle of the engine driving state. The time cycle of the starter generator driving state is a time cycle from a timing when the drive state is switched from the engine driving state to the starter generator driving state to a timing when the drive state is switched from the starter generator driving state to the engine driving state. The time cycle of the engine driving state is a time cycle from a timing when the drive state is switched from the starter generator driving state to the engine driving state to a timing when the drive state is switched from the engine driving state to the starter generator driving state.

The control device 60 switches the drive state of the crankshaft 15 such that the ratio between the time cycle of the starter generator driving state and the time cycle of the engine driving state can be a ratio that does not decrease the average state of charge of the electric power storage 4. In other words, the control device 60 switches the drive state of the crankshaft 15 such that a decrement in the state of charge of the electric power storage 4 during a period of the starter generator driving state does not exceed an increment in the state of charge during a period of the engine driving state. The ratio between the time cycle of the starter generator driving state and the time cycle of the engine driving state is set such that the state of charge of the electric power storage 4 averaged over the time cycle does not decrease in either the starter generator driving state or the engine driving state. This can suppress an occurrence of the situation in which the state of charge of the electric power storage 4 is excessively lowered.

The time cycle of the starter generator driving state is set so as to keep the state of charge of the electric power storage 4 from falling below such a level that the rotation speed of the crankshaft 15 is maintained at a speed capable of resuming the combustion operation of the engine 10. That is, the time cycle of the starter generator driving state is set such that a drop in the state of charge of the electric power storage 4 in the starter generator driving state is not too much to resume the combustion operation of the engine 10. Accordingly, the combustion operation of the engine 10 can be easily resumed.

In this embodiment, the charging of the electric power storage 4 and the combustion operation of the engine 10 occur in accordance with their time cycles. The starter generator driving state and the engine driving state are periodically created. This can improve the fuel efficiency while suppressing an occurrence of the situation in which the state of charge of the electric power storage 4 is excessively lowered.

[Third Embodiment]

A third embodiment of the present teaching will now be described. In descriptions of the third embodiment given below, the same drawings and reference signs as mentioned in the first embodiment are used, and differences from the first embodiment described above will mainly be described.

This embodiment is different from the first embodiment in terms of the switching condition in step S25 of FIG. 7.

In step S25 of this embodiment, the switching condition is a combination of the state of charge of the electric power storage 4 and a timing coming with a predefined time cycle. To be specific, if the state of charge of the electric power storage 4 exceeds the upper limit of the predefined range, the control device 60 switches the drive state of the crankshaft 15 from the engine driving state to the starter generator driving state. Then, the control device 60 switches the drive state from the starter generator driving state to the engine driving state with a predetermined time cycle after a timing when the drive state was switched to the starter generator driving state. As a result, a period of the starter generator driving state is fixed. A period of the engine driving state varies depending on the state of charge of the electric power storage 4.

In this embodiment, the period of the starter generator driving state is fixed, while the period of the engine driving state is controlled in accordance with the state of charge of the electric power storage 4, and therefore the state of charge of the electric power storage 4 can be maintained with a simple control operation.

In the third embodiment described above, the state of charge of the electric power storage 4 and the predefined time cycle are alternately referred to for switching the state. The state of charge of the electric power storage 4 and the predefined time cycle may be referred to in another way. For example, it may be possible to refer to the state of charge of the electric power storage 4 for first switching, and to refer to the predefined time cycle for the second and subsequent switching. In other words, the state switching is performed with the predefined time cycle, and a start of this sequence of state switching is permitted in accordance with the state of charge of the electric power storage 4.

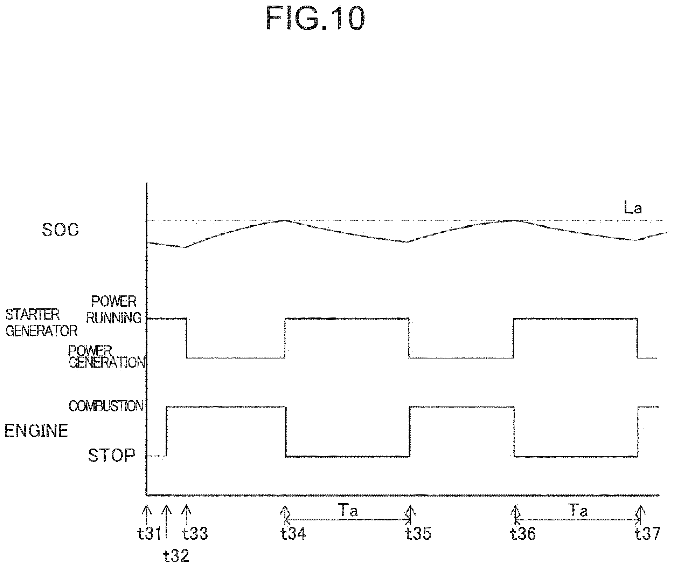

FIG. 10 is a time chart showing drive state transitions of the engine and the starter generator according to the third embodiment of the present teaching.

Operations from time t31 to time t34 of FIG. 10 are the same as the operations from time t1 to time t4 of FIG. 9.

At time t34, if the state of charge of the electric power storage 4 exceeds the upper limit La of the predefined range, the control device 60 switches the drive state of the crankshaft 15 from the engine driving state to the starter generator driving state.

At time t35 which comes after an elapse of a time cycle Ta from the time t34 when the switching to the starter generator driving state was made, the control device 60 switches the drive state from the starter generator driving state to the engine driving state.

Then at time t36, if the state of charge of the electric power storage 4 exceeds the upper limit La of the predefined range, the control device 60 switches the drive state of the crankshaft 15 from the engine driving state to the starter generator driving state.

At time t37 which comes after elapse of the time cycle Ta from the time t36 when the switching to the starter generator driving state was made, the control device 60 switches the drive state from the starter generator driving state to the engine driving state.

In this manner, the state of charge of the electric power storage 4 can be maintained with a simple control operation.

The embodiments described above illustrate the example in which the electric power storage is charged over the entire period of the engine driving state. The engine driving state, however, is not limited to this, and the period of the engine driving state may include a period in which the electric power storage is not charged. The embodiments described above illustrate the example in which the engine combustion is stopped over the entire period of the starter generator driving state. The starter generator driving state, however, is not limited to this, and the period of the starter generator driving state may include a period in which the engine combustion is stopped.

In the embodiments described above, the engine driving state and the starter generator driving state are illustrated as the plurality of switching object states. The plurality of states, however, are not particularly limited, and for example, may include a freewheeling state where the crankshaft is driven in a forward rotation by inertia and a balanced state where an engine torque and a starter generator torque are equal to each other, as described above.

In the example illustrated above, the engine driving state is a state where the starter generator charges the electric power storage. The engine driving state, however, may include a period in which the electric power storage is not charged.

The embodiments described above illustrate the example in which the state of the crankshaft is repeatedly switched between the engine driving state and the starter generator driving state during the period in which the state of the main switch is continued and the vehicle is stopped. In the vehicle of the present teaching, it may also be acceptable that a period in which a forward rotation of the crankshaft is stopped is included in the period in which the state of the main switch is continued and the vehicle is stopped.

The control device 60 of the embodiments described above switches the state of the crankshaft while the main switch 5 is continuously in the ON state and the vehicle 1 is stopped. Here, another condition may be added as the condition for switching the state of the crankshaft. For example, the control device 60 may switch the state of the crankshaft while the main switch 5 is continuously in the ON state, the vehicle 1 is stopped, and the acceleration operator 8 is not operated, for example.

The embodiments illustrate the example in which if the engine temperature exceeds the predefined switching allowed temperature, the plurality of states are switched from one to another while the operation corresponding to the switched state is performed. Alternatively, the control device of the present teaching may switch the plurality of states from one to another while performing the operation corresponding to the switched state in a case where the engine temperature does not exceed the predefined switching allowed temperature.

The configurations of the embodiments described above may be combined as appropriate. For example, the state of charge of the electric power storage and the timing with the predefined time cycle, which serve as the state switching condition, may be combined differently from the third embodiment. For example, if the state of charge of the electric power storage exceeds the upper limit of the predefined range, the control device switches the drive state of the crankshaft from the engine driving state to the starter generator driving state. The subsequent switching between the starter generator driving state and the engine driving state, which is repeatedly performed by the control device, may be conditional only on the predetermined time cycle.

The embodiments illustrate the example in which switching from one to another among the plurality of states is performed if the predefined switching condition is satisfied. In this respect, a condition for the control device of the present teaching to switch from one to another among the plurality of states may not always have to be a predefined condition. It may be acceptable that the control device switches from one to another among the plurality of states based on a lottery using random numbers.

The embodiments illustrate the example in which the starter generator includes the rotor provided with the plurality of magnetic pole portions, the number of which is more than the number of teeth. This, however, does not limit the present teaching, and it may be acceptable that the number of magnetic pole portions provided in the rotor is equal to or less than the number of teeth.

The embodiments illustrate the starter generator 20 of outer rotor type. This, however, does not limit the present teaching, and the starter generator may be of inner rotor type and may be of axial type.

The embodiments illustrate a three-phase brushless motor as an example of the starter generator. In the present teaching, however, it is not indispensable that the stator windings of the starter generator have a three-phase configuration. For example, two phases, or four or more phases may be employed.

The embodiments illustrate the case where the engine 10 is a single-cylinder engine. The engine of the present teaching, however, is not particularly limited as long as the engine has a high-load region and a low-load region. Thus, a multi-cylinder engine is also adoptable. Examples of the multi-cylinder engine include a straight double-cylinder engine, a parallel double-cylinder engine, a V-type double-cylinder engine, and a horizontal opposed double-cylinder engine. The number of cylinders included in the multi-cylinder engine is not particularly limited. The multi-cylinder engine may be, for example, a four-cylinder engine.

Another aspect of the present teaching is not limited to the examples described above, and can adopt the following configurations (9) to (10), for example. The embodiments described above can be mentioned as embodiments of the following configurations (9) to (10).

(9) The vehicle of (6), wherein
the control device switches a state of the crankshaft from the engine driving state to the starter generator driving state such that the state of charge of the electric power storage decreases, in accordance with the state of charge of the electric power storage.

In (9), the state switching to decrease the state of charge of the electric power storage is performed in accordance with the state of charge of the electric power storage, which makes it easy to maintain the state of charge of the electric power storage.

(10) The vehicle of (9), wherein

the control device switches a state of the crankshaft from the starter generator driving state to the engine driving state such that the state of charge of the electric power storage increases, with the predefined time cycle.

In (10), the state of charge of the electric power storage can be easily maintained by a simple control.

Reference Signs List

| | |
|---|---|
| 1 | vehicle |
| 3a, 3b | wheel |
| 4 | electric power storage |
| 5 | main switch |
| 10 | engine |
| 15 | crankshaft |
| 20 | starter generator |
| 30 | rotor |
| 37a | magnetic pole portion |
| 40 | stator |
| 43 | teeth |
| 60 | control device |
| 61 | inverter |
| 611 to 616 | switching part |

**Claims**

1. A vehicle comprising:

an engine including a crankshaft, and configured to output rotational power via the crankshaft;
a drive member that drives the vehicle by receiving rotational power outputted from the engine via the crankshaft;
a starter generator including a rotor that is connected to the crankshaft so as to rotate with its speed ratio to the crankshaft being fixed, the starter generator being configured to drive the crankshaft in starting the engine, and to be driven by the engine to generate electric power when the engine is in a combustion operation;
an electric power storage that exchanges a current between itself and the starter generator;

a main switch that receives an instruction for supplying electric power in accordance with an operation performed thereon; and
a control device that causes a combustion operation of the engine in a state where the main switch allows the control device to be supplied with electric power by an operation performed thereon, and then, in at least part of a period in which the state of the main switch is continued and the vehicle is stopped, performs all of: (A) continuing a forward rotation of the crankshaft by repeatedly switching a state of the crankshaft among a plurality of states including an engine driving state where the crankshaft is driven in a forward rotation by a combustion operation of the engine and a starter generator driving state where the crankshaft is driven in a forward rotation by the starter generator driving the crankshaft; (B) stopping a combustion operation of the engine in at least part of a period in which the crankshaft is in the starter generator driving state; and (C) directing the starter generator to charge the electric power storage in at least part of a period in which the crankshaft is in the engine driving state.

2. The vehicle according to claim 1, wherein after the control device causes a combustion operation of the engine in the state where the main switch allows the control device to be supplied with electric power; the control device continues a forward rotation of the crankshaft by repeatedly switching a state of the crankshaft among the plurality of states, in at least part of a period in which the state of the main switch is continued, the vehicle is stopped, and a temperature of the engine exceeds a predefined switching allowed temperature.

3. The vehicle according to claim 1 or 2, wherein after the control device causes a combustion operation of the engine in the state where the main switch allows the control device to be supplied with electric power; the control device continues a forward rotation of the crankshaft by alternately switching a state of the crankshaft between the engine driving state and the starter generator driving state, in at least part of a period in which the state of the main switch is continued and the vehicle is stopped.

4. The vehicle according to claim 3, wherein the control device switches a state of the crankshaft from the engine driving state to the starter generator driving state such that the state of charge of the electric power storage decreases, and switches a state of the crankshaft from the starter generator driving state to the engine driving state such that the state of charge of the electric power storage increases.

5. The vehicle according to any one of claims 1 to 4, wherein
   the control device switches a state of the crankshaft upon satisfaction of a predefined switching condition.

6. The vehicle according to claim 5, wherein
   the control device switches a state of the crankshaft in accordance with the state of charge of the electric power storage.

7. The vehicle according to claim 5, wherein
   the control device switches a state of the crankshaft with a predefined time cycle.

8. The vehicle according to any one of claims 1 to 7, wherein
   the starter generator includes a stator having a stator core and windings, the stator core being provided with a plurality of teeth spaced from one another by a slot in a circumferential direction, the windings being wound on the teeth, each of the plurality of teeth having a portion where the winding is wound, and
   the rotor includes a permanent magnet part and a plurality of magnetic pole portions, the number of the plurality of magnetic pole portions being more than the number of the plurality of teeth, the plurality of magnetic pole portions being formed by the permanent magnet part and provided on a surface opposed to the stator.

FIG. 1

EP 3 404 236 A1

# FIG. 2

22

# FIG. 3

20

43
W
SL } 40
ST
41

37 } 30
34(31)

37a

38

FIG. 4A

ROTATION
SPEED(rpm)

FIG. 4B

FIG. 5

# FIG.6

START

S11

MAIN SWITCH ON? — No

Yes

S12

STARTER SWITCH ON? — No

Yes

DRIVING BY STARTER GENERATOR — S13

FUEL SUPPLY — S14

S15

ENGINE START COMPLETED? — No

Yes

POST-START OPERATION — S16

END

# FIG.7

```
        OUTPUT SHAFT
     ROTATING OPERATION
              │
              ▼
        ╱ S21    No
   ◇ MAIN SWITCH ON? ◇ ──────────►  ┌──────────────┐
              │                       │    STOP  S22 │
             Yes                      │  COMBUSTION  │
              │                       └──────────────┘
              ▼                              │
        ╱ S23                                ▼
No ◄── ◇ VEHICLE SPEED ◇                  ( END )
        ◇   ZERO?    ◇
              │
             Yes
              ▼
        ╱ S24        No
   ◇ WARM-UP      ◇ ──────►  ┌──────────────┐
   ◇ COMPLETED?   ◇          │ ENGINE DRIVING S29│
              │              │    STATE     │
             Yes             └──────────────┘
              ▼                     │
        ╱ S25                       │
   ◇ SWITCHING    ◇  No             │
   ◇ CONDITION    ◇ ────┐          │
   ◇ SATISFIED?   ◇     │          │
              │         │          │
            Yes S26     │          │
              ▼         │          │
   ┌────────────────┐   │◄─────────┘
   │ SWITCH DRIVE   │   │
   │    STATE       │   │
   └────────────────┘   │
              ◄─────────┘
   S28        │  S27
┌──────────┐  ▼
│ TRAVELING│ ┌──────────────┐
│ OPERATION│ │ VEHICLE IN-STOP│
└──────────┘ │  OPERATION    │
              └──────────────┘
```

27

# FIG.8

```
        ┌──────────────────────┐
        │   VEHICLE IN-STOP     │
        │     OPERATION         │
        └──────────────────────┘
                   │
                   ▼        S31
              ╱─────────╲            ENGINE DRIVING STATE
            ╱  DRIVE STATE? ╲──────────────────────────┐
              ╲─────────╱                                │
STARTER GENERATOR │                                      │
DRIVING STATE     │            S32                       │            S34
                  ▼                                      ▼
        ┌──────────────────────┐          ┌──────────────────────┐
        │   STOP COMBUSTION     │          │     COMBUSTION        │
        │                       │          │     OPERATION         │
        └──────────────────────┘          └──────────────────────┘
                   │        S33                       │        S35
                   ▼                                  ▼
        ┌──────────────────────┐          ┌──────────────────────┐
        │  DRIVING BY STARTER   │          │ POWER GENERATION BY   │
        │     GENERATOR         │          │  STARTER GENERATOR    │
        └──────────────────────┘          └──────────────────────┘
                   │                                  │
                   ▼◄─────────────────────────────────
              (  END  )
```

# FIG.9

EP 3 404 236 A1

# FIG.10

30

## INTERNATIONAL SEARCH REPORT

International application No.

PCT/JP2017/001194

A. CLASSIFICATION OF SUBJECT MATTER

*F02D29/02*(2006.01)i, *F02D17/00*(2006.01)i, *F02N11/04*(2006.01)i

According to International Patent Classification (IPC) or to both national classification and IPC

B. FIELDS SEARCHED

Minimum documentation searched (classification system followed by classification symbols)

F02D29/02, F02D17/00, F02N11/04, B60K6/20

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2015-74296 A (Denso Corp.),<br>20 April 2015 (20.04.2015),<br>paragraphs [0005], [0006], [0011], [0023] to<br>[0025]; fig. 1<br>(Family: none) | 1,3-6,8<br>2,7 |
| Y<br>A | WO 2014/073484 A1 (Shindengen Electric Mfg.<br>Co., Ltd.),<br>15 May 2014 (15.05.2014),<br>paragraphs [0009] to [0011]<br>& CN 104040827 A | 1,3-6,8<br>2,7 |
| Y | WO 2015/093577 A1 (Yamaha Motor Co., Ltd.),<br>25 June 2015 (25.06.2015),<br>paragraph [0044]; fig. 1, 3, 4<br>& EP 3064763 A | 8 |

| ☒ Further documents are listed in the continuation of Box C. | ☐ See patent family annex. |

| * | Special categories of cited documents: | | "T" | later document published after the international filing date or priority date and not in conflict with the application but cited to understand the principle or theory underlying the invention |
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| 15 February 2017 (15.02.17) | 28 February 2017 (28.02.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2017/001194

| C (Continuation). | DOCUMENTS CONSIDERED TO BE RELEVANT | |
|---|---|---|
| Category* | Citation of document, with indication, where appropriate, of the relevant passages | Relevant to claim No. |
| A | JP 2012-70581 A (Panasonic Corp.), 05 April 2012 (05.04.2012), paragraphs [0005], [0006] (Family: none) | 1-8 |
| A | JP 2010-163879 A (Honda Motor Co., Ltd.), 29 July 2010 (29.07.2010), abstract & CN 101776020 A | 1-8 |

Form PCT/ISA/210 (continuation of second sheet) (January 2015)

**EP 3 404 236 A1**

**Patent documents cited in the description**

- JP 2010163879 A